# FASCICULE DE BREVET EUROPEEN

(11) **EP 2 312 451 B1**
(45) Date de publication et mention de la délivrance du brevet: **12.02.2014**
(21) Numéro de dépôt: 10354039.9
(22) Date de dépôt: 24.08.2010
(51) Int. Cl.: G06F 13/40, G06F 15/80, G06F 15/78

(54) **Noeuds d'entrée/sortie de réseau sur puce**
Ein-/Ausgang eines Netzwerkknotens auf einem torischem Chip
Input/ouput network nodes on a toric chip

(30) Priorité: 04.09.2009 FR 0904209
(43) Date de publication de la demande: 20.04.2011
(73) Titulaire: Kalray, 91400 Orsay (FR)
(72) Inventeur: Harrand, Michel, 38120 Saint Egrève (FR)
(74) Mandataire: de Jong, Jean Jacques

(56) Documents cités:
- WO-A1-89/03564
- US-A- 5 689 647
- US-A1- 2007 140 280

## Description

### Domaine technique de l'invention

L'invention concerne une topologie de réseau sur puce (« Network on Chip » ou NoC), et plus particulièrement un agencement de points d'entrée/sortie dans un réseau maillé.

### État de la technique

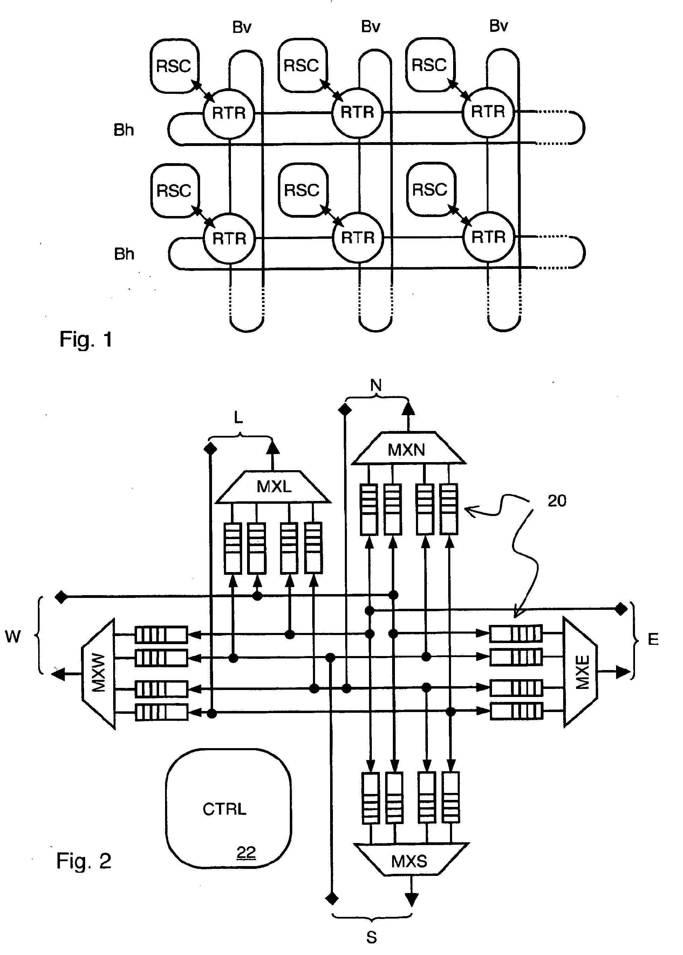

La figure 1 représente un exemple de réseau sur puce de topologie matricielle (ou maillée), tel que décrit dans le brevet Européen EP1701274.

Ce réseau comprend une pluralité de bus disposés en rangées (bus horizontaux Bh) et en colonnes (bus verticaux Bv). A chaque intersection entre un bus horizontal et un bus vertical est disposé un routeur RTR permettant de faire une connexion point à point entre chaque segment de bus (horizontal et vertical) qui lui arrive. En outre, chaque routeur RTR est relié à une ressource locale RSC, qui peut être productrice ou consommatrice de données.

Ce genre de réseau est destiné à faire communiquer n'importe quelle ressource RSC avec n'importe quelle autre ressource. Une communication peut emprunter plusieurs routeurs qui se chargent d'acheminer les données vers la destination finale.

Pour limiter le nombre de noeuds que peut emprunter une communication, le réseau est de préférence torique. Comme cela est représenté, les routeurs se trouvant sur un bord de la matrice sont reliés aux routeurs se trouvant au bord opposé de la matrice. En outre, cela permet d'utiliser la même structure de routeur, au bord comme au centre.

La figure 2 représente schématiquement un routeur utilisable dans ce contexte. Le routeur gère cinq voies, à savoir les quatre directions correspondant aux segments de bus, dénommées Nord (N), Sud (S), Est (E) et Ouest (W), et une voie L correspondant à la ressource locale.

A chaque direction de sortie du routeur est associé un multiplexeur MX à quatre entrées. Ces quatre entrées correspondent aux entrées du routeur qui ne sont pas associées à la direction du multiplexeur. Par exemple, le multiplexeur MXN de la sortie Nord reçoit les entrées L, S, E et W du routeur. En d'autres termes, le routeur interdit qu'un paquet entrant par une direction ne ressorte par la même direction.

En outre, chaque entrée de multiplexeur est précédée d'une queue (FIFO) 20 destinée à stocker les données en attente de sortie.

Un automate 22 assure un arbitrage et commande les sélections opérées par les multiplexeurs et l'écriture des données entrant par les cinq voies dans les queues 20.

Une application envisagée d'un réseau du type de la figure 1 est la mise en oeuvre de calculs parallèles. Dans ce cas, chaque ressource RSC est une grappe de processeurs. Un tel réseau doit alors être associé à des périphériques d'entrée/sortie permettant au moins de fournir les données sur lesquelles doivent s'opérer les calculs, et d'extraire les résultats des calculs.

Une solution immédiate est d'utiliser certaines des ressources RSC pour effectuer les opérations d'entrée/sortie requises, de préférence des ressources se trouvant en bord de matrice afin de faciliter leur connexion à des bornes de contact vers l'extérieur de la puce.

Cette solution, à taille de matrice constante, pénalise la puissance de calcul du réseau. Un certain nombre de grappes de processeurs se voient remplacées par des modules d'entrée/sortie dont les besoins en calcul sont très inférieurs à ceux que peut satisfaire une grappe de processeurs, mais dont la spécificité, notamment le fait de présenter des connexions vers l'extérieur de la puce, fait que leurs fonctions ne peuvent pas être remplies, même en temps partagé, par une grappe de processeurs.

Ainsi, si la matrice est dimensionnée pour fournir une puissance de calcul donnée, les modules d'entrée/sortie devront être rajoutés au réseau. Selon les choix opérés par l'homme du métier, ce rajout peut augmenter la latence du réseau de manière significative et/ou augmenter inutilement la surface occupée par le réseau sur une puce.

Une solution envisageable pour ajouter des modules d'entrée/sortie à une matrice donnée consiste à rajouter deux colonnes et deux rangées de routeurs en périphérie de la matrice, auxquels on relie les modules d'entrée/sortie. On passe alors d'une matrice de routeurs nxn à une matrice (n+2)x(n+2), ce qui est susceptible d'augmenter le nombre de noeuds empruntés par les communications, et donc la latence du réseau.

Une autre solution pourrait consister à utiliser des routeurs périphériques à six voies, la sixième voie servant à relier un module d'entrée/sortie. Cette solution, décrite par exemple dans la demande de brevet WO89/03564, a l'inconvénient que les routeurs périphériques seront plus grands en surface que les routeurs internes, ce qui pose des problèmes de placement/routage des routeurs sur la puce. Pour des raisons de simplification de la conception, on préférera que tous les routeurs soient identiques, à six voies. Dans ce cas les routeurs internes auront des fonctions inutilisées qui occuperont inutilement de la surface.

A titre indicatif, un routeur à six voies comporterait, par rapport à celui de la figure 2, un multiplexeur de plus, et chaque multiplexeur aurait cinq entrées, avec les mémoires FIFO correspondantes.

La figure 3 illustre une solution permettant de limiter ces inconvénients, telle que proposée dans le brevet US5689647. On retrouve le réseau matriciel torique de la figure 1. On a inséré, en périphérie de la matrice, des routeurs à trois voies IOR, que l'on désignera par « routeur d'entrée/sortie ». Deux des voies de chacun de ces routeurs IOR, que l'on qualifiera d'internes, servent à assurer la continuité de la rangée ou colonne dans laquelle le routeur se trouve. La troisième voie, que l'on qualifiera d'externe, sert à insérer et à extraire des données du réseau par un module d'entrée/sortie IOM.

Contrairement aux routeurs internes RTR, que l'on appellera « routeurs d'infrastructure », les routeurs IOR disposés dans les rangées ne sont pas reliés à des routeurs de la même colonne. De même, les routeurs IOR disposés dans les colonnes ne sont pas reliés à des routeurs de la même rangée.

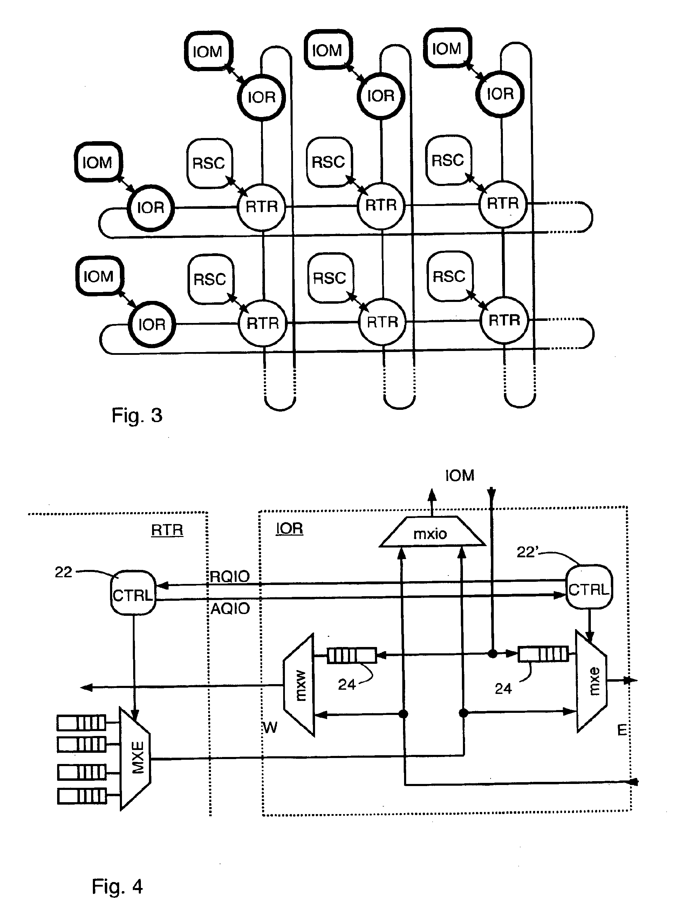

Dans l'hypothèse où la matrice initiale a une dimension de nxn, l'ajout des routeurs IOR selon la figure 3 porte la dimension de la matrice à (n+2)x(n+2). Ainsi, le réseau de la figure 3 est susceptible d'avoir une latence plus grande que le réseau de la figure 1.

Le document US-A-2007/0140280 décrit un réseau de routeurs tel que spécifié dans le préambule de la revendication indépendante 1.

### Résumé de l'invention

On souhaite donc pouvoir rajouter, dans un réseau sur puce à grappes de processeurs, des modules d'entrée/sortie sans augmenter notablement la latence du réseau, ni augmenter inutilement la surface de la puce.

Pour tendre à satisfaire ce besoin, on prévoit un réseau maillé torique tel que défini dans la revendication indépendante 1 et comprenant une matrice de routeurs d'infrastructure dont chacun est relié à deux autres routeurs appartenant à une même rangée et à deux autres routeurs appartenant à une même colonne ; et des routeurs d'entrée/sortie dont chacun est relié par deux entrées internes à deux autres routeurs appartenant, soit à une même rangée, soit à une même colonne, et comprenant une entrée externe servant à alimenter le réseau en données. Chaque routeur d'entrée/sortie est dépourvu de queues pour ses entrées internes et comprend des queues associées à son entrée externe, gérées par un arbitre agencé pour aussi gérer les queues d'un routeur d'infrastructure connecté au routeur d'entrée/sortie.

Selon un mode de réalisation, l'arbitre est prévu pour gérer les queues du routeur d'entrée/sortie en combinaison avec les queues du routeur d'infrastructure de manière que la combinaison des deux routeurs se comporte comme un routeur à six voies.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, dans lesquels :
- la figure 1 représente schématiquement un réseau sur puce classique de topologie torique ;
- la figure 2 représente schématiquement la structure d'un routeur d'un réseau de la figure 1 ;
- la figure 3 représente schématiquement un mode de réalisation de réseau torique muni de routeurs d'entrée/sortie ;
- la figure 4 représente un mode de réalisation de routeurs ; et
- la figure 5 représente schématiquement une optimisation du réseau de la figure 3.

### Description d'un mode de réalisation préféré de l'invention

La figure 4 représente schématiquement un mode de réalisation combiné de routeur d'entrée/sortie IOR et de routeur d'infrastructure RTR assurant que les routeurs d'entrée/sortie IOR de la figure 3 n'introduisent aucune latence. On a représenté une portion Est d'un routeur d'infrastructure RTR, notamment son multiplexeur MXE et son circuit de commande 22, reliée à un routeur d'entrée/sortie IOR, représenté en totalité.

Le routeur IOR, étant à trois voies, comporte trois multiplexeurs à deux entrées. Un multiplexeur Ouest mxw reçoit sur une première entrée des données provenant du module d'entrée/sortie IOM, et sur une deuxième entrée les données provenant d'un routeur non représenté placé à l'Est. Un multiplexeur Est mxe reçoit sur une première entrée des données provenant du module d'entrée/sortie IOM, et sur une deuxième entrée les données provenant du multiplexeur Est MXE du routeur RTR représenté.

Les données provenant du module d'entrée/sortie IOM arrivent aux entrées correspondantes des multiplexeurs mxw et mxe par l'intermédiaire de queues FIFO 24.

Par contre, comme cela est représenté, toutes les autres entrées des multiplexeurs du routeur IOR sont dépourvues de queues FIFO. De cette manière, des données traversant le routeur IOR ne subissent aucune latence.

La description suivante de la coopération entre un routeur RTR et un routeur IOR est faite en faisant allusion aux éléments représentés à la figure 4, c'est-à-dire une liaison entre un routeur IOR avec un routeur RTR placé à l'Ouest. Le fonctionnement est similaire pour les autres combinaisons possibles dans un réseau.

Afin d'assurer qu'aucune donnée ne soit perdue du fait de l'absence de queues FIFO à la traversée du routeur IOR, les circuits de commande CTRL des routeurs IOR et RTR interagissent de manière que la combinaison des multiplexeurs MXE et mxe représentés se comporte comme un seul multiplexeur à cinq canaux munis de queues FIFO. Ces cinq canaux sont constitués par les quatre entrées du multiplexeur MXE et l'entrée du multiplexeur mxe associée au module IOM. En d'autres termes, la combinaison du routeur d'entrée/sortie et du routeur d'infrastructure se comporte comme un routeur à six voies.

Lorsque le module IOM n'a aucune donnée à fournir sur la sortie Est du routeur IOR, le multiplexeur mxe est positionné pour sélectionner la sortie du multiplexeur MXE du routeur RTR. Le multiplexeur MXE est commandé de manière classique et les données qu'il fournit sont transmises directement, sans latence, sur la sortie Est du routeur IOR.

Lorsque le module IOM commence à fournir des données, elles s'empilent dans la queue 24 du multiplexeur mxe. Le circuit de commande 22' du routeur IOR active alors un signal de requête RQIO à l'attention du circuit de commande 22 du routeur RTR. Celui-ci passe alors dans un mode d'arbitrage sur cinq canaux au lieu de quatre, le cinquième canal étant celui associé à la queue 24 du multiplexeur mxe.

Lorsque l'arbitre décide de servir le cinquième canal, le circuit de commande du routeur RTR active un signal d'acquittement AQIO à destination du circuit de commande du routeur IOR. Ce dernier positionne le multiplexeur mxe pour sortir une unité de données, par exemple un paquet, de la queue 24.

Tant que la queue 24 contient des données, le signal RQIO reste actif et le circuit de commande du routeur RTR reste en mode d'arbitrage sur cinq canaux. Le signal AQIO est activé paquet par paquet, à chaque fois que l'arbitre décide de servir le cinquième canal.

En principe, seuls les routeurs d'infrastructure RTR reliés à des routeurs d'entrée/sortie IOR ont besoin de mettre en oeuvre le mécanisme qui vient d'être décrit. Néanmoins, comme ce mécanisme implique de la logique occupant une surface négligeable, on pourra prévoir cette logique dans tous les routeurs d'infrastructure pour que tous ces routeurs soient identiques. On facilite ainsi la conception des réseaux. Les routeurs qui n'utilisent pas la fonctionnalité auront leur entrée associée au signal RQIO câblée à un niveau logique inactif.

Dans un réseau torique tel que représenté en figure 3, on trouve deux routeurs IOR à la suite dans les liaisons entre les bords de la matrice. Ces routeurs IOR devraient donc se relayer les signaux RQIO et AQIO. Néanmoins, la figure 3 correspond à une représentation simplifiée pour des raisons de clarté. En pratique, on cherche à éviter des liaisons aussi longues que celles qui relieraient les bords.

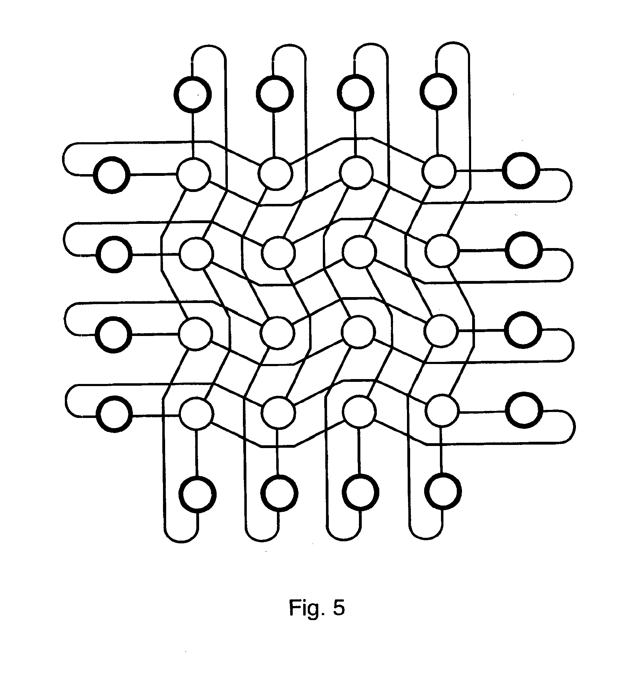

La figure 5 représente un réseau matriciel torique dans lequel les longueurs des liaisons entre noeuds sont optimisées. La matrice est de dimension 4x4, à titre d'exemple. Les routeurs d'infrastructure sont représentés en trait normal, et les routeurs d'entrée/sortie sont représentés en trait gras.

Les routeurs d'infrastructure sont reliés de manière entrelacée par rangées et colonnes, c'est-à-dire qu'un routeur de rang n, dans une colonne ou une rangée, est relié à un routeur de rang n+2 (les routeurs périphériques échappant à cette règle pour l'une de leurs liaisons). Les routeurs d'entrée/sortie viennent s'insérer dans les liaisons sortant des routeurs d'infrastructure périphériques.

Avec cette configuration, toutes les liaisons entre routeurs ont une longueur de même ordre, et chaque routeur d'entrée/sortie se trouve entre deux routeurs d'infrastructure.

## Revendications

1. Réseau maillé torique comprenant :
- une matrice de routeurs d'infrastructure (RTR) dont chacun est relié à deux autres routeurs appartenant à une même rangée et à deux autres routeurs appartenant à une même colonne ; et
- des routeurs d'entrée/sortie (IOR) dont chacun est relié par deux entrées internes à deux autres routeurs appartenant, soit à une même rangée, soit à une même colonne, et comprenant une entrée externe (IOM) servant à alimenter le réseau en données ;
**caractérisé en ce que** chaque routeur d'entrée/sortie (IOR) est dépourvu de queues pour ses entrées internes et comprend des queues (24) associées à son entrée externe (IOM) gérées par un arbitre (22, 22') agencé pour aussi gérer les queues (20) d'un routeur d'infrastructure (RTR) connecté au routeur d'entrée/sortie.

2. Réseau maillé selon la revendication 1, dans lequel l'arbitre (22, 22') est prévu pour gérer les queues (24) du routeur d'entrée/sortie (IOR) en combinaison avec les queues (20) du routeur d'infrastructure de manière que la combinaison des deux routeurs se comporte comme un routeur à six voies.

3. Réseau maillé selon la revendication 1, dans lequel chaque routeur d'entrée/sortie (IOR) comprend un multiplexeur à deux entrées (mxe) dont une première entrée reçoit les données de l'une des queues (24) du routeur d'entrée/sortie, et une deuxième entrée reçoit directement des données (MXE) d'un routeur d'infrastructure.

4. Réseau maillé selon la revendication 1, dans lequel l'arbitre comprend :
- un premier circuit de gestion (22') dans le routeur d'entrée/sortie (IOR) agencé pour produire un signal de requête (RQIO) lorsqu'une donnée externe arrive dans l'une des queues (24) du routeur d'entrée/sortie et pour provoquer la transmission de la donnée à la réception d'un signal d'acquittement (AQIO) ; et
- un second circuit de gestion (22) dans le routeur d'infrastructure (RTR) agencé pour gérer des priorités parmi les queues (20) du routeur d'infrastructure et pour, à réception du signal de requête (RQIO), inclure la queue (24) du routeur d'entrée/sortie dans la gestion des priorités, puis produire le signal d'acquittement (AQIO) lorsque le second circuit de gestion détermine que la queue (24) du routeur d'entrée/sortie est prioritaire.

## Patentansprüche

1. Vermaschtes Ringnetz umfassend:
- eine Matrix von Infrastruktur-Routern (RTR), die jeweils mit zwei weiteren, zu einer selben Reihe gehörigen Routern und mit zwei weiteren, zu einer selben Spalte gehörigen Routern verbunden sind; und
- Eingangs-/Ausgangsrouter (IOR), die jeweils über zwei interne Eingänge mit zwei weiteren, entweder zu einer selben Reihe oder zu einer selben Spalte gehörigen Routern verbunden sind, und die einen externen Eingang (IOM) zur Versorgung des Netzes mit Daten umfassen;
**dadurch gekennzeichnet, dass** jeder Eingangs-/Ausgangsrouter (IOR) keine Warteschlangen für seine internen Eingänge aufweist und seinem externen Eingang (IOM) zugeordnete Warteschlangen (24) umfasst, die von einem Arbiter (22, 22') verwaltet werden, der ausgelegt ist, um auch die Warteschlangen (20) eines, an den Eingangs-/Ausgangsrouter angeschlossenen Infrastruktur-Routers (RTR) zu verwalten.

2. Ringnetz nach Anspruch 1, in dem der Arbiter (22, 22') vorgesehen ist, um die Warteschlangen (24) des Eingangs-/Ausgangsrouters (IOR) in Kombination mit den Warteschlangen (20) des Infrakstruktur-Routers zu verwalten, so dass sich die Kombination der beiden Router wie ein Sechs-Kanäle-Router verhält.

3. Ringnetz nach Anspruch 1, in dem jeder Eingangs-/Ausgangsrouter (IOR) einen Multiplexer mit zwei Eingängen (mxe) umfasst, von denen ein erster Eingang die Daten einer der Warteschlangen (24) des Eingangs-/Ausgangsrouters empfängt und ein zweiter Eingang direkt Daten (MXE) eines Infrastruktur-Routers empfängt.

4. Ringnetz nach Anspruch 1, in dem der Arbiter folgendes umfasst:
- eine erste Verwaltungssteuerung (22') im Eingangs-/Ausgangsrouter (IOR), die ausgelegt ist, um ein Anforderungssignal (RQIO) zu erzeugen, wenn ein externes Datum in einer der Warteschlangen (24) des Eingangs-/Ausgangsrouters ankommt und um die Weiterleitung des Datums beim Empfang eines Quittungssignals (AQIO) auszulösen; und
- eine zweite Verwaltungssteuerung (22) im Infrastruktur-Router (RTR), die ausgelegt ist, um Prioritäten unter den Warteschlangen (20) des Infrastruktur-Routers zu verwalten und um die Warteschlange (24) des Eingangs-/Ausgangsrouters beim Empfang des Anforderungssignals (RQIO) in die Prioritätenverwaltung aufzunehmen und dann das Quittungssignal (AQIO) zu erzeugen, wenn die zweite Verwaltungssteuerung bestimmt, dass die Warteschlange (24) des Eingangs-/Ausgangsrouters prioritär ist.

## Claims

1. Torus network comprising:
- a matrix of infrastructure routers (RTR), each of which is connected to two other routers belonging to the same row and to two other routers belonging to the same column; and
- input/output routers (IOR), each of which is connected by two internal inputs to two other routers belonging either to the same row, or to the same column, and comprising an external input (IOM) for supplying the network with data;
**characterized in that** each input/output (IOR) router is devoid of queues for its internal inputs and comprises queues (24) assigned to its external input (IOM) managed by an arbiter (22, 22') configured to also manage the queues (20) of an infrastructure router (RTR) connected to the input/output router.

2. Network according to claim 1, wherein the arbiter (22, 22') is configured to manage the queues (24) of the input/output router (IOR) in combination with the queues (20) of the infrastructure router so that the combination of the two routers behaves as a six-channel router.

3. Network according to claim 1, wherein each input/output router (IOR) comprises a multiplexer with two inputs (mxe), a first input of which receives data from one of said queues (24) of the input/output router, and a second input of which receives data (MXE) directly from an infrastructure router.

4. Network according to claim 1, wherein the arbiter comprises:
- a first control circuit (22') in the input/output router (IOR) configured to produce a request signal (RQIO) when data arrives in one of the queues (24) of the input/output router and to cause transmission of the data upon receiving an acknowledgement signal (AQIO); and
- a second control circuit (22) in the infrastructure router (RTR) configured to manage priorities among the queues (20) of the infrastructure router and for, upon receiving the request signal (RQIO), including the queue (24) of the input/output router in the priority management, and producing the acknowledgement signal (AQIO) when the second management circuit determines that the queue (24) of the input/output router has priority.
